**Europäisches Patentamt**

**European Patent Office**

**Office européen des brevets**

(11) Veröffentlichungsnummer: **0 155 494**
**A1**

# (12) EUROPÄISCHE PATENTANMELDUNG

(21) Anmeldenummer: **85101414.2**

(22) Anmeldetag: **11.02.85**

(51) Int. Cl.⁴: **G 01 S 17/66**

(30) Priorität: **01.03.84 DE 3407588**

(43) Veröffentlichungstag der Anmeldung:
**25.09.85 Patentblatt 85/39**

(84) Benannte Vertragsstaaten:
**AT CH FR GB LI NL SE**

(71) Anmelder: **Fried. Krupp Gesellschaft mit beschränkter Haftung**
**Altendorfer Strasse 103**
**D-4300 Essen 1(DE)**

(72) Erfinder: **Gerlach, Manfred**
**Ahauser Strasse 10**
**D-2800 Bremen 44(DE)**

(54) **Vorrichtung zum automatischen Verfolgen eines sich bewegenden Objektes.**

(57) Bei einer automatischen Zielverfolgungsvorrichtung ist zum Zwecke der schnellen und präzisen Verfolgung eines im Raum sich dreidimensional bewegenden Objektes ein um eine Horizontal- (12) und Vertikalachse (11) drehbarer Meßkopf (10) mit zwei optischen Sendern (15, 16) und einem damit ausgerichteten optischen Empfänger (17) ausgerüstet. Beide Sender senden alternierend eine Lichtimpulsfolge aus und führen dabei periodische Schwingungen in einer quer zur Sendeachse stehenden Ebene aus. Der eine Sender schwingt dabei horizontal (24) und der andere vertikal (25). Bei Empfang eines von den Lichtimpulsen hervorgerufenen Lichtechos im Empfänger wird die Auslenkung desjenigen Senders, der diesen Lichtimpuls ausgesendet hat, von seiner Nulllage gemessen und in eine Stellgröße für eine Verstellung des Meßkopfes um seine Vertikalachse - wenn der Lichtimpuls vom horizontal schwingenden Sender herrührt - bzw. um seine Horizontalachse - wenn der Lichtimpuls vom vertikal schwingenden Sender herrührt - umsetzt. Die der Auslenkung proportionale Stellgröße bewirkt eine entsporechende Drehung des Meßkopfes im Sinne einer Verkleinerung der festgestellten Auslenkung.

Fig. 1

EP 0 155 494 A1

FRIED. KRUPP GESELLSCHAFT MIT BESCHRÄNKTER HAFTUNG
in Essen

Vorrichtung zum automatischen Verfolgen eines
sich bewegenden Objektes

Die Erfindung betrifft eine Vorrichtung zum automatischen Verfolgen eines sich bewegenden Objektes der im Oberbegriff des Anspruchs 1 angegebenen Gattung.

Bei einer bekannten Vorrichtung dieser Art (DE-OS 31 28 433) wird der hier zugleich als Entfernungsmesser verwendete Meßkopf automatisch einem horizontal sich bewegenden, mit Reflektoren bestückten Objekt, im allgemeinen Ziel genannt, nachgeführt, und zwar auch dann noch, wenn das Ziel sich mit hoher Geschwindigkeit, z. B. bis zu 60 km/h, bewegt. Für die Zielverfolgung ist eine relativ geringe Sendeleistung erforderlich.

Diese automatische Zielverfolgung ist jedoch beschränkt auf ein im wesentlichen nur in einer Ebene sich bewegendes Objekt, wobei geringe Bewegungskomponenten des Objekts in eine hierzu senkrechte Richtung unschädlich sind. Die bekannte Vorrichtung versagt jedoch, wenn die Bewegungskomponente in der dritten Dimension groß wird, und ermöglicht auch keine Verfolgung eines im Raum dreidimensional sich bewegenden Objektes.

Der Erfindung liegt die Aufgabe zugrunde, eine Vorrichtung zur automatischen Zielverfolgung der eingangs genannten Art derart zu verbessern, daß auch Ziele mit dreidimensionalen Bewegungskomponenten mit gleich guter Präzision zuverlässig verfolgt werden können.

Diese Aufgabe ist bei einer Vorrichtung zur automatischen Verfolgung eines sich bewegenden Objektes der im Oberbegriff des Anspruchs 1 definierten Gattung erfindungsgemäß durch die Merkmale im Kennzeichnungsteil des Anspruchs 1 gelöst.

Mit der erfindungsgemäßen Vorrichtung wird nicht nur eine automatische, zuverlässige und mit hoher Präzision arbeitende Zielverfolgung von im Raum sich bewegenden Objekten erreicht, sondern auch die hierzu erforderliche Sendeleistung und Sendeenergiedichte so gering gehalten, daß bei Verwendung von Lasersendern die Unfallverhütungsvorschriften bei der geforderten Sendereichweite eingehalten werden. Letzteres wird durch das alternierende Senden der beiden Sender erreicht, das zum anderen noch die Möglichkeit eröffnet, mit dem gleichen optischen Empfänger beide Regelungsschaltungen für den Vertikal- und Horizontal-Stellantrieb zu steuern.

Eine vorteilhafte Ausbildungsform der Erfindung ergibt sich aus Anspruch 2. Durch diese Maßnahmen wird nur in demjenigen Abschnitt der Schwingungsperiode der Sender gesendet, in welchem diese die größte Bewegungsgeschwindigkeit aufweisen. In Verbindung mit der Phasenverschiebung zwischen den Schwenkbewegungen der beiden Sender senden diese nur abwechselnd und nie gleichzeitig.

Eine vorteilhafte Ausführungsform der Erfindung ergibt sich auch aus Anspruch 3. Durch diese Maßnahme kann bei geringer Sendeleistung eine beträchtliche Reichweite der Vorrichtung erzielt werden, so daß die Verfolgung weit entfernt liegender Ziele ermöglicht wird. Zugleich kann der Meßkopf als Sende- und Empfangsteil für einen aktiven optischen Entfernungsmesser verwendet werden.

Eine vorteilhafte Ausführungsform der Erfindung ergibt sich auch aus Anspruch 4. Dabei wird eine einfache technische Realisierung der schwingenden Sender erzielt. Grundsätzlich ist es jedoch auch möglich, die Sendediode in der Fokusebene fest anzuordnen und die Objektive der Sender in einer quer zur optischen Achse der Objektive ausgerichteten Ebene horizontal bzw. vertikal schwingen zu lassen.

Die Erfindung ist anhand eines in der Zeichnung dargestellten Ausführungsbeispiels im folgenden näher beschrieben. Es zeigen:

Fig. 1 ein Blockschaltbild einer Zielverfolgungsvorrichtung in schematischer Darstellung,

Fig. 2 ein die Zuordnung des Sendezeitraums der Sender der Zielverfolgungsvorrichtung in Fig. 1 zu ihren Schwingungsbewegung zeigendes Diagramm für zwei Schwingungsperioden des horizontal schwingenden Senders (oben) und des vertikal schwingenden Senders (unten),

Fig. 3 ein etwa in 1000 m Abstand von der Zielverfolgungsvorrichtung erzeugtes Abbild jeweils eines horizontal und vertikal scharf gebündelten Sendestrahls der Zielverfolgungsvorrichtung in Fig. 1.

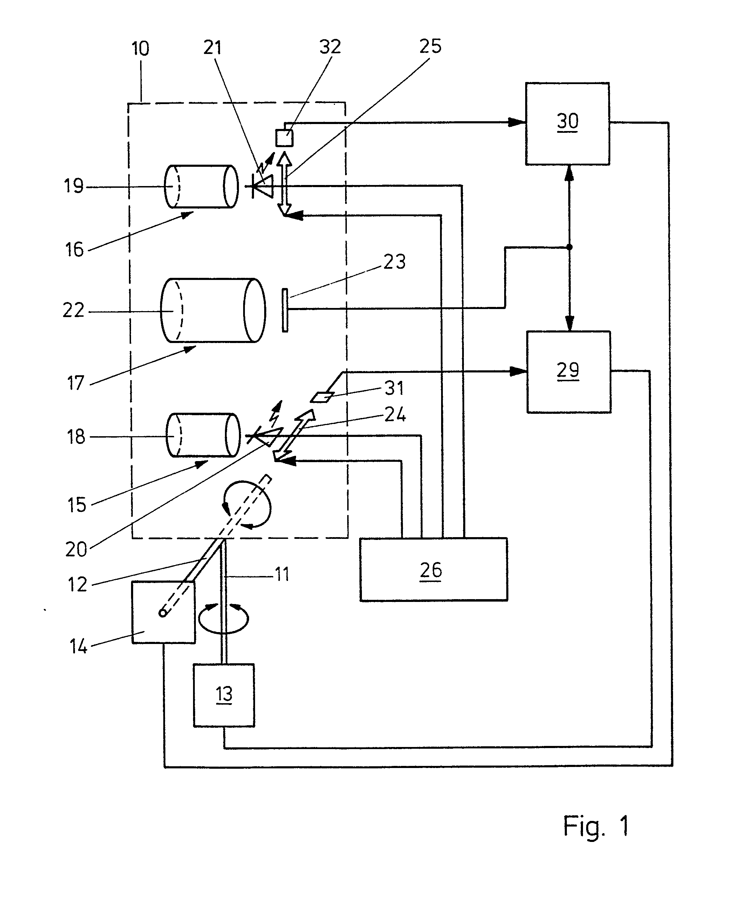

Die in Fig. 1 schematisch im Blockschaltbild dargestellte Zielverfolgungsvorrichtung wird meist in Verbindung mit der fortlaufenden Ortsbestimmung der Bewegungsbahn eines Objektes verwendet. Die Vorrichtung weist einen Meßkopf 10 auf, der um eine Vertikalachse 11 und eine Horizontalachse 12 drehbar, z. B. auf einem im Gelände fest aufgestellten Tripoden angeordnet ist. Zur Drehung des Meßkopfes 10 um seine Vertikalachse 11 ist ein motorischer Horizontal-Stellantrieb 13 und zur Drehung des Meßkopfes 10 um seine Horizontalachse 12 ist ein motorischer Vertikal-Stellantrieb 14 vorgesehen. Diese Stellantriebe 13, 14 können den Meßkopf 10 um die entsprechende Achse 11, 12 jeweils in beiden Drehrichtungen drehen, was in Fig. 1 durch entsprechende Pfeilsymbole angedeutet ist.

Der Meßkopf 10 weist einen ersten optischen Sender 15, einen zweiten optischen Sender 16 und einen optischen Empfänger 17 auf. Jeder optische Sender 15 bzw. 16 besteht aus einem Objektiv 18 bzw. 19 und einer in der Fokusebene des Objektivs 18 bzw. 19 angeordneten Lichtquelle in Form einer Lasersendediode 20 bzw. 21. Der optische Empfänger 17 besteht aus einem Objektiv 22 und einer in der Fokusebene des Objektivs 22 angeordneten Fotodiode 23. Die Fotodiode 23 detektiert über das Objektiv 22 einfallende Lichtechos als Folge der Lichtaussendung durch die Sender 15, 16 und Reflexion an einem am Ziel befestigten Reflektorkranz aus ringförmig angeordneten Tripelspiegeln. Die optischen Achsen der Objektive 18, 19 und 22 sind parallel zueinander ausgerichtet und liegen in einer vertikalen Ebene. Die Objektive 18, 19 der Sender 15, 16 sind symmetrisch zum Objektiv 22 des Empfängers 17 angeordnet.

Die Lasersendediode 20, 21 der beiden Sender 15,
16 führen in der Fokusebene der Objektive 18, 19
fortlaufend eine periodische Schwenkbewegung mit
einer vorgegebenen Maximalamplitude aus, wobei die
Lasersendediode 20 des ersten optischen Senders 15
in Horizontalrichtung und die Lasersendediode 21
des zweiten optischen Senders 16 in Vertikalrichtung schwingt. Hierzu sind die Lasersendedioden
20, 21 jeweils auf einer in Fig. 1 durch ein Pfeilsymbol angedeuteten Schwingfeder 24, 25 angeordnet,
die jeweils von einem Elektromagneten angetrieben
wird. Aufbau und Wirkungsweise des Schwingantriebs
der Schwingfedern 24, 25 ist in der DE-OS 31 28 433
ausführlich beschrieben.

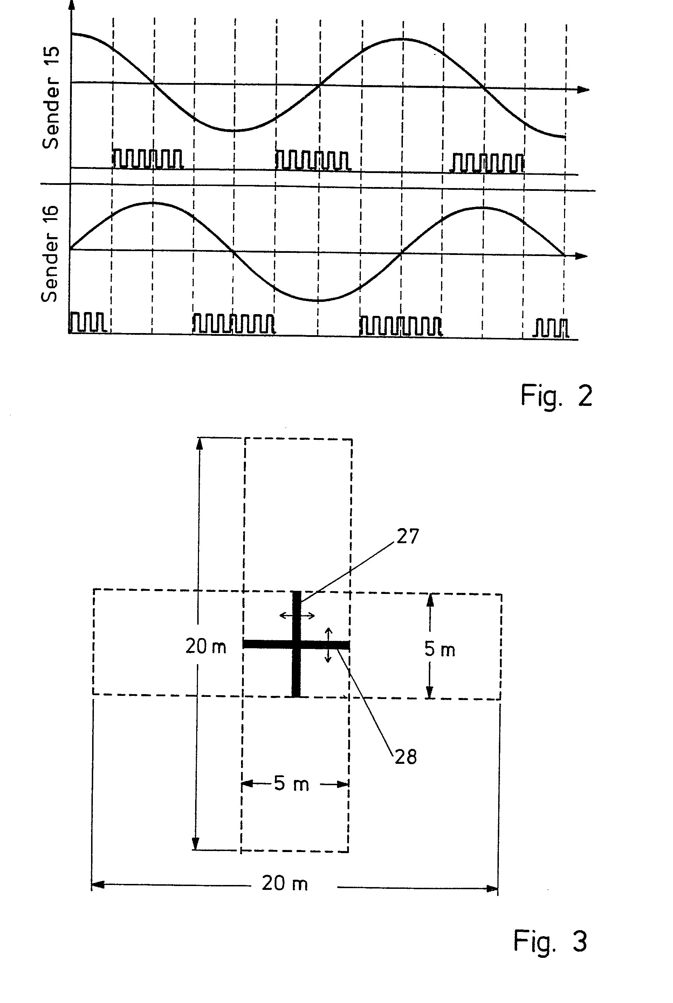

Die elektromagnetischen Antriebe für die Schwingfedern 24 und 25 werden von einer Steuerschaltung
26 derart gesteuert, daß die Lasersendediode 20
des ersten optischen Senders 15 eine periodische
Schwingung ausführt, wie sie in Fig. 2 im oberen
Bild dargestellt ist, und die Lasersendediode 21
eine periodische Schwingung ausführt, wie sie in
Fig. 2 unten dargestellt ist, und zwar jeweils für
zwei Schwingungsperioden. Die Schwingungsebenen
stehen - wie bereits erwähnt - senkrecht aufeinander. Wie aus Fig. 2 ersichtlich, sind die Schwingungen der beiden Lasersendedioden um 90° gegeneinander phasenverschoben.

Die Lasersendedioden 20, 21 senden Laserimpulse mit
einer Sendeimpulsfolgefrequenz aus, die wesentlich
größer ist als die Schwingungsfrequenz der Lasersendediode 20, 21. Auch die Ansteuerung der Lasersendediode 20, 21 erfolgt über die Steuerschaltung 26
und zwar in einer solchen Weise, daß immer nur eine der beiden Lasersendedioden 20, 21, und zwar abwechselnd, eine Laserimpulsfolge aussendet. Solche Laserimpulsfolgen sind in Fig. 2 jeweils in Zuordnung zu der Schwingungsbewegung der zugehörigen Lasersendediode 20, 21 dargestellt. Wie dort ersichtlich, wird bei beiden Sendern 15, 16 eine Laserimpulsfolge immer dann ausgesendet, wenn die Geschwindigkeit der die zugehörige Lasersendediode 20 bzw. 21 tragenden Schwinge 24 bzw. 25 am größten ist. Dies ist in dem 90°-Abschnitt der Fall, der sich symmetrisch und beidseitig des Durchgangs der Lasersendedioden 20, 21 durch ihre Nullage erstreckt, die in der optischen Achse der Sendeobjektive 18, 19 liegt. Da während jeder Schwingungsperiode die Lasersendedioden 20, 21 zweimal ihre Nullage durchlaufen, und zwar um 90° phasenverschoben zueinander, sendet jeweils eine Lasersendediode 20 bzw. 21 eine Laserimpulsfolge aus, während die andere Lasersendediode 21 bzw. 20 gerade abgeschaltet ist. Die Impulsfolgen beider Lasersendedioden 20, 21 sind sozusagen ineinander geschachtelt.

Durch entsprechende Ausbildung der Sendeobjektive 18, 19 bzw. der Lasersendedioden 20, 21 sind die Laserimpulse der Lasersendedioden 20 in Horizontalrichtung und die Laserimpulse der Lasersendediode 21 in Vertikalrichtung scharf gebündelt. Jeder Laserimpuls erzeugt damit in z. B. 1000 m Abstand von dem Meßkopf 10 eine Abbildung, wie sie in Fig. 3 durch die schwarzen Balken dargestellt ist. Durch die hohe Impulsfrequenz erscheint für das Auge gleichzeitig ein von der Lasersendediode 20 erzeugter horizontal scharf gebündelter Sendestrahl 27 mit einer horizontalen Ausdehnung von etwa 20 cm und einer vertikalen Höhe von etwa 5 m und ein von der Lasersendediode 21 erzeugter Sendestrahl 28 mit etwa 20 cm vertikaler Ausdehnung und etwa 5 m horizontaler Länge, alles bezogen auf einen Betrachtungsabstand von etwa 1000 m. Wie durch die Pfeile in Fig. 3 angedeutet ist, wird der Sendestrahl 27 durch die Schwingung der Lasersendediode 20 über einen Bereich von ca. 20 m - bezogen auf einen Betrachtungsabstand von ca. 1000 m - in Horizontalrichtung und der Sendestrahl 28 durch die Schwingung der Lasersendediode 21 über einen gleich großen Bereich in Vertikalrichtung geschwenkt.

Zumindest jeweils einer der während einer vollen Schwingung der Lasersendedioden 20, 21 ausgesandten Laserimpulse trifft bei auf das Ziel oder Objekt ausgerichtetem Meßkopf 10 einen Tripelspiegel des am Ziel oder Objekt befestigten Reflektorkranzes, wird dort reflektiert und gelangt über das Objektiv 22 des Empfängers 17 auf die Fotodiode 23. Um den gesamten Schwenkbereich der Lasersendediode 20, 21 zu erfassen, weist das Objektiv 22 des Empfängers 17 einen Öffnungswinkel auf, der zumindest den Schwenkbereich des Sendestrahls 27 in Horizontalrichtung und den Schwenkbereich des Sendestrahls 28 in Vertikalrichtung, bezogen auf die maximale Reichweite der Vorrichtung, überdeckt. Wie aus Fig. 3 hervorgeht, wäre dies bei einer maximalen Reichweite von 1000 m ein Schwenkbereich von jeweils 20 m.

Die von der Fotodiode 23 empfangenen reflektierten Laserimpulse, sog. Lichtechos, werden jeweils einer mit dem Empfänger 17 verbundenen ersten und zweiten Regelschaltung 29, 30 zugeführt. Die Regelschaltung 29 weist eine Fühlvorrichtung 31 und die Regelschaltung 30 eine Fühlvorrichtung 32 auf. Jede Fühlvorrichtung 31, 32 erfaßt die momentane Stellung der Lasersendedioden 20 bzw. 21, und zwar als eine elektrische Größe, die der Auslenkung der jeweiligen Lasersendediode 20, 21 von der in der optischen Achse liegenden Nullage proportional ist. Immer dann wenn ein Lichtecho von der Fotodiode 23 des Empfängers 17 detektiert wird, erzeugt die Regelschaltung 29 bzw. 30 eine Stellspannung, die der Auslenkung der Lasersendediode 20, 21 von ihrer Nullage proportional ist. Diese Stellspannung wird den zugeordneten Stellantrieben 13, 14 in der Weise zugeführt, daß eine Verstellung des Meßkopfes 10 in der Drehrichtung bewirkt wird, die zu einer Verringerung der Auslenkung führt.

Aufbau und Wirkungsweise der Regelungsschaltung 29, welche die Auslenkung der horizontal schwingenden Lasersendediode 20 detektiert und entsprechend den Horizontal-Stellantrieb 13 zur Drehung des Meßkopfes 10 um seine Vertikalachse 11 ansteuert, ist in der DE-OS 31 28 433 ausführlich beschrieben. Die Regelungsschaltung 30 ist identisch aufgebaut mit dem Unterschied, daß sie über die Fühlvorrichtung 32 die Auslenkung der vertikal schwingenden Lasersendediode 21 detektiert und in eine entsprechende Stellgröße für den Vertikal-Stellantrieb 14 zur entsprechenden Verstellung des Meßkopfes 10 um seine Horizontalachse 12 umsetzt. Beide Regelungsschaltungen 29, 30 sind gleich schnell, da für beide dieselbe Regelinformationsdichte anfällt.

Wie in der DE-OS 31 28 433 beschrieben, kann die hier beschriebene Vorrichtung zur Zielverfolgung zu einer Vorrichtung zur laufenden Positionsbebestimmung des verfolgten Ziels oder Objektes vervollständigt werden. Hierzu ist es lediglich erforderlich, den Drehwinkel des Meßkopfes 10 um die Vertikalachse 11 und die Horizontalachse 12 zu erfassen, was z. B. jeweils mittels eines inkrementalen Drehgebers für jede Achse möglich ist. Zur Bestimmung der Entfernung des Objektes vom Meßkopf 10 kann ein oder beide optischen Sender 15, 16 zusammen mit dem optischen Empfänger 17 durch eine zusätzliche Impulslaufzeitmeß- und -auswerteeinheit zu einem aktiven optischen Entfernungsmesser vervollständigt werden, wie dies in der DE-OS 31 28 433 beschrieben ist. In gleicher Weise wie dies in der genannten DE-OS beschrieben ist, läßt sich auch die Schwingungsamplitude beider Lasersendedioden 20, 21 variieren zu dem Zweck, bei Zielverlust die Schwingungsamplitude sehr groß zu machen, um das Ziel schneller wieder zu finden.

-.-.-.--.-.--.-.--.-.--.-

FRIED. KRUPP GESELLSCHAFT MIT BESCHRÄNKTER HAFTUNG
in Essen

PATENTANSPRÜCHE

1. Vorrichtung zum automatischen Verfolgen eines sich bewegenden Objektes mit einem um eine Vertikal- und Horizontalachse drehbaren optischen Meßkopf, der einen in Horizontalrichtung über einen vorgebbaren Schwenkbereich periodisch schwenkenden optischen Sender mit horizontal scharf gebündeltem Sendestrahl und einen vom Sendestrahl hervorgerufene Lichtechos aufnehmenden optischen Empfänger aufweist, dessen optische Achse parallel zur optischen Achse des in Schwenkstellungs-Nullage befindlichen Senders ausgerichtet ist, mit einem motorischen Horizontal- und Vertikal-Stellantrieb zur Drehung des Meßkopfes um die Vertikal- und Horizontalachse und mit einer Regelungsschaltung, welche die bei Empfang eines Lichtechos momentane horizontale Auslenkung des Senders von seiner Nullage in eine den Meßkopf im Sinne einer horizontalen Auslenkungsreduzierung verstellende Stellgröße für den Horizontal-Stellantrieb umsetzt, dadurch gekennzeichnet, daß der Meßkopf (10) einen zweiten, in Vertikalrichtung über einen vorgebbaren Schwenkbereich periodisch schwenkenden optischen Sender (16) mit vertikal scharf gebündeltem Sendestrahl (28) aufweist, dessen optische Achse in der Schwenkstellungs-Nullage parallel zur optischen Achse des Empfängers (17) ausgerichtet ist, daß eine zweite Regelungsschaltung (30) vorgesehen ist, welche die bei Empfang eines Lichtechos momentane vertikale Auslenkung des zweiten Senders (16) von seiner Nullage in eine den Meßkopf (10) im Sinne einer vertikalen Auslenkungsreduzierung verstellende Stellgröße für den Vertikal-Stellantrieb (14) umsetzt, und daß die Sender (15, 16) alternierend ein- bzw. ausgeschaltet sind.

2. Vorrichtung nach Anspruch 1, dadurch gekennzeichnet, daß die Schwenkbewegungen der beiden Sender (15, 16) gegeneinander um $90^{\circ}$ phasenverscho-ben sind und daß jeder Sender (15, 16) in jeder halben Schwenkperiode nur während eines über die Nullage hinweg und symmetrisch zu dieser sich erstreckenden $90^{\circ}$-Abschnittes der Schwenkperiode eingeschaltet ist.

3. Vorrichtung nach Anspruch 1 oder 2, dadurch gekennzeichnet, daß die von den Sendern (15, 16) ausgesendeten Sendestrahlen (27, 28) aus Lichtimpulsen, vorzugsweise Laserimpulsen, mit einer gegenüber der Schwingungsfrequenz der Sender (15, 16) sehr großen Sendeimpulsfolgefrequenz bestehen.

4. Vorrichtung nach einem der Ansprüche 1 bis 3, dadurch gekennzeichnet, daß die Sender (15, 16) jeweils ein Objektiv (18, 19) und eine in der Fokusebene des Objektivs (18, 19) horizontal bzw. vertikal schwingende Sendediode, vorzugsweise Lasersendediode (20, 21), aufweisen und daß die optischen Achsen der Senderobjektive (18, 19) und eines Empfängerobjektivs (22) parallel zueinander ausgerichtet sind.

5. Vorrichtung nach Anspruch 4, dadurch gekennzeichnet, daß die Senderobjektive (18, 19) symmetrisch zum Empfängerobjektiv (22) angeordnet sind.

-.--.-.--.-.-.--.--.-

Fig. 1

Fig. 2

Fig. 3

0155494

Europäisches
Patentamt

EUROPÄISCHER RECHERCHENBERICHT

Nummer der Anmeldung

EP 85 10 1414

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 853 695 (DIEHL)<br>* Figur 1; Seite 10, Zeile 15 - Seite 11, Zeile 9 * | 1 | G 01 S 17/66 |
| A | DE-A-2 533 697 (PRECITRONIC)<br>* Figur 1; Seite 6, Zeile 4 - Seite 7, Zeile 14 * | 1 | |
| D,A | DE-A-3 128 433 (F. KRUPP)<br>* Figur 2; Seite 13, Zeilen 4-20 * | 3,4 | |
| A | FR-A-2 473 731 (COMPAGNIE GENERALE D'ELECTRICITE)<br>* Figur 1 * | | |

RECHERCHIERTE SACHGEBIETE (Int. Cl. 3)

G 01 S 17/66
G 05 D 1/12

Der vorliegende Recherchenbericht wurde für alle Patentansprüche erstellt.

| Recherchenort | Abschlußdatum der Recherche | Prüfer |
|---|---|---|
| BERLIN | 21-05-1985 | BREUSING J |